# EUROPEAN PATENT APPLICATION

(11) **EP 1 143 711 A1**
(43) Date of publication of application: **10.10.2001**
(21) Application number: 01302433.6
(22) Date of filing: 16.03.2001
(51) Int. Cl.: H04N 5/00

(54) **Improvements to broadcast data receivers**

(30) Priority: 18.03.2000 GB 0006448
(71) Applicant: Pace Micro Technology PLC, Saltaire, Shipley, BD18 3LF (GB)
(72) Inventor: Hoath, William, Bury BL9 9QR (GB)
(74) Representative: Wood, Graham

(57) **Abstract**

A Broadcast data receiver is provided which is capable of receiving data relating to a number of television channels. The receiver is also able to generate an electronic programme guide (EPG) providing information relating to the television channels, programmes and/or other functions which are available for selection by a user of the apparatus. The user typically makes the selection using a remote control handset. The EPG is generated using a first source in the form of embedded code provided in the receiving apparatus and other functions of the apparatus/television set are generated using a second source in the form of software language provided in the receiving apparatus. The utilisation of the first and/or second source by the receiving apparatus is controlled in response to a user selection using the control means.

## Description

The invention to which this application relates is to improvements in electrical apparatus commonly known as broadcast data receivers (BDRs) or set top boxes. The apparatus is provided to allow the reception and processing of digital data for the generation of video, audio and/or text for display on display means such as, for example, a television set connected to the apparatus or listening via speakers connected to the apparatus. The apparatus of the invention can be provided as a self contained unit for connection to a television set or can be provided as an integral part of a television set.

The digital data is typically broadcast from a data broadcaster at a remote location, for example, a television company or a system provider. The data is broadcast via one of a satellite transmission system, a cable system or a terrestrial system and, in each case, digital data is encoded prior to transmission, transmitted, received by appropriate apparatus and decoded and processed by the broadcast data receiver which is the subject of this application.

BDRs are increasingly required to provide a guide for the user of the apparatus detailing the range of services which are available. One form of the guide is known as an electronic programme guide (EPG) for display on the display screen of a television set. The EPG typically includes a list of the channels available for viewing and selection by the user, details of television programmes shown on the channels and associated information relating to the programmes. The user is able to select an appropriate programme entry on the EPG using control means, such as a remote control, and the broadcast data receiver generates a display of the selected programme on the television set for viewing by the user and/or displays purchase to allow the user of the apparatus to purchase the selected programme for viewing.

The need for BDRs to provide an EPG is largely due to the wide range of television channels which are available for viewing. As the number of television channels increases, the requirement for providing an EPG is therefore becoming an increasingly standard feature of broadcast data receivers.

At present, there are two ways in which the EPG function can be provided in broadcast data receivers. One way is to generate the EPG from fully embedded code provided in a broadcast data receiver. Alternatively the EPG can be generated from software (hereinafter referred to as middleware) which allows the EPG, in addition to other possible applications, to be generated from middleware software language.

The advantage of providing fully embedded code for the generation of an EPG is that this generation can be done relatively quickly upon a user selecting to view the EPG. Any changes in the EPG in response to user selections can also be undertaken in a relatively speedy manner. However, a disadvantage of fully embedded code EPG generation is that the code used is predetermined and is very difficult, if not impossible, to alter once it has become embedded in the data receiver. In contrast, an advantage of generating the EPG and other applications using middleware software language is that the EPG can be updated by the broadcaster. The broadcaster can therefore transmit, download and instruct the execution of applications for addition into the EPG/BDR even when the BDR is fully installed at the premises of the user.

It will therefore be readily appreciated that both systems for generating EPG displays have advantages and disadvantages and an aim of the present invention is to provide the user of the BDR with the benefits of using both systems, without the user necessarily being aware of how these benefits are derived.

According to a first aspect of the present invention there is provided broadcast data receiving apparatus capable of receiving data relating to a number of television channels, said receiving apparatus processing the data to generate video, audio, and/or text for display on display means and/or listening via speakers connected to or forming part of the receiving apparatus, said video, audio and/or text used in combination to generate television programmes, said receiving apparatus further including means for generating an electronic programme guide (EPG) for display on the display screen and means for generating a number of other applications, said EPG providing information relating to a range of television channels, programmes and/or apparatus functions which are available for selection by a user of the apparatus using appropriate control means characterised in that said EPG is generated using a first source in the form of embedded code provided in the receiving apparatus and further and/or the other applications are generated using a second source in the form of software language provided in the receiving apparatus, the utilisation of the first and/or second source being controlled in response to a user selection using said control means.

It is envisaged that the control means for the electronic programme guide will, when activated by the user use the first source of the embedded code. This allows both the generation of the EPG and changes in the EPG in response to user selections to be undertaken quickly and efficiently.

When other applications are selected by the user, such as, for example, the selection of an internet web browser application or for applications where changes occur in the application(s) at frequent time intervals, the use of middleware software language is more beneficial and the receiver switches to use this second source when the appropriate applications are selected.

By providing the receiver apparatus with the ability to generate applications from different sources and to switch between the sources in accordance with the present invention, so the advantages of both embedded and middleware language sources can be obtained for the user, without the user being aware of or having to manually perform the switch between the sources.

In one embodiment, if a user selects the generation of an EPG then the EPG is generated from the embedded code in the broadcast data receiver. If, during the use of the EPG the user makes a new application selection, then if the generation of the newly selected application is more advantageously performed and generated using the middleware, then the receiving apparatus is directed to generate the selected application from that source when the user selection is made. In one embodiment the newly selected application may be made as a result of the user selecting one of the options displayed on the EPG.

The user selection is preferably made by the depression of a particular button on the control means, such as a remote control device.

In order for the user to obtain the benefits of the receiving apparatus using two sources for data generation, it is important that the underlying state of the software used for both sources is such that the change from one source to the other source is performed in an organised and stable manner within the broadcast data receiver, with all resources freed for use so that in effect, the user does not readily appreciate that the source used in response to their selection has changed.

A specific embodiment of the invention is now described with reference to the accompanying drawings, wherein:-
Figure 1 illustrates an EPG display on a television set; and
Figure 2 illustrates a web browser display.

In accordance with the present invention, there is provided a broadcast data receiver connected to or provided as an integral part of a television set. Part of the function of the broadcast data receiver is to generate an electronic programme guide (EPG) for display on a display screen of the television set.

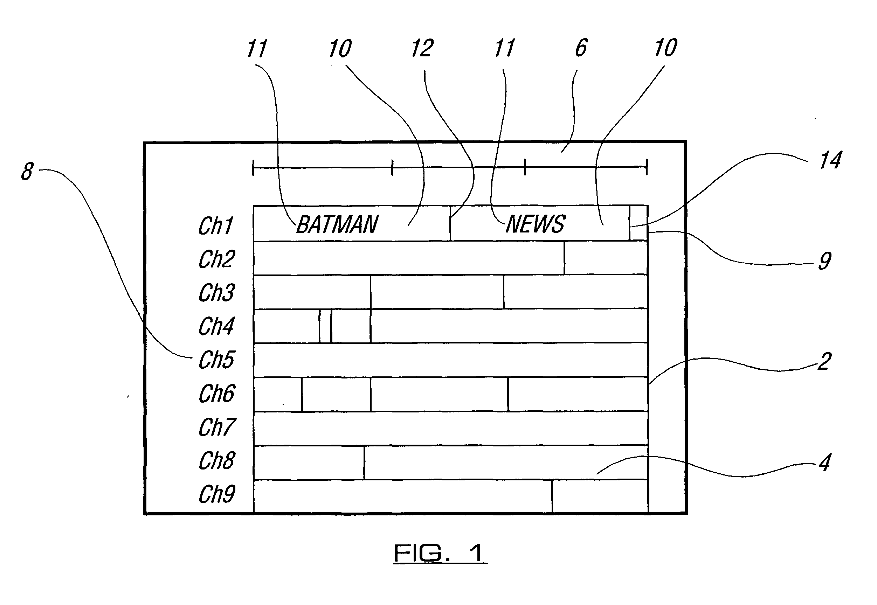

Referring to Figure 1, there is illustrated a first type of EPG display 2 which is in the form of a grid 4 comprising a time bar 6 and a list of channels 8. Each row adjacent to a channel is divided into one or more portions 10. For example, row 9 for channel 1 is provided with two portions 10.

Each of the portions 10 represents a television programme and typically includes an indication 11, such as the programme title, within the portion to allow a user to identify the programme. If the portion is too small to contain the full programme title, an indication other than the title may be provided by which the user is able to identify the programme.

The beginning and end points of each portion can be compared to time bar 4 to allow the user to determine the start and finish time of the programme identified in the portion. For example, the first end 12 of portion 10 indicates the start time of a programme and the end 14 of the portion indicates the end time of the programme.

It will therefore be appreciated that the visual representation of this type of EPG is relatively clear and simple for a user to view and the EPG provides a clear indication of television programmes that are available to view immediately and/or in the future. An important requirement is that the EPG is generated quickly when selected by a user and it is found that using embedded code in the data receiver as a source for generating the EPG is particularly advantageous.

If the user decides to select a particular portion of the EPG by highlighting the portion using control means, such as a remote control, then the broadcast data receiver displays the selected programme for viewing providing that the data is available and received for the programme at that time.

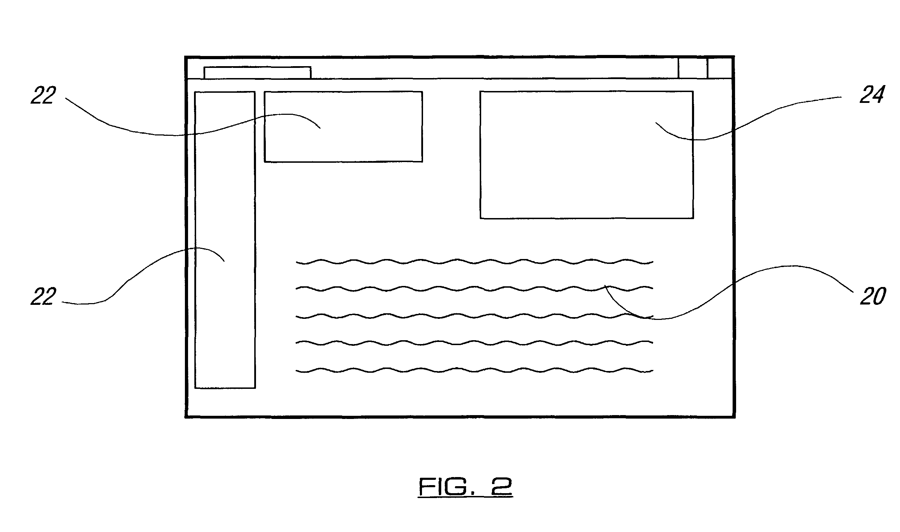

Alternatively if the user decides not to select a programme from the EPG but to select an alternative application or function of the broadcast data receiver or EPG, such as a web browser, on selection of this alternative application/function using the remote control the receiver utilises the middleware software in the apparatus rather than embedded code. Therefore, in response to the selection made by the user on the remote control device, a command is generated in the receiver to use middleware rather than embedded code to generate the web browser display of Figure 2 which can include portions 20 including text, portions 22 with graphic images and/or portions 24 displaying moving video images.

Thus, in accordance with the invention, if a user, when viewing an EPG such as that displayed in Figure 1 which is generated from the BDR then makes a selection to use another service provided from the BDR which in this case is an internet service and which results in the generation of Figure 2 or vice versa, then, in addition to commencing the generation of the display of Figure 2, the broadcast data receiver also switches the source of software used for the generation from embedded code used for the generation of the EPG to middleware used for the generation of the internet service.

By doing this, and allowing this to happen repeatedly for various user selections during use of the apparatus, so the utilisation of the broadcast data receiving apparatus is improved for the user.

## Claims

1. Broadcast data receiving apparatus having the ability to receive data relating to a number of television channels, said receiving apparatus processing the data to generate video, audio and/or text for display on display means and/or listening via speakers connected to or forming part of the receiving apparatus, said video, audio and/or text used in combination to generate television programmes, said receiving apparatus further including means for generating an electronic programme guide (EPG) (2) for display on the display screen and means for generating a number of other applications, said EPG providing information relating to a range of television channels, programmes and/or apparatus functions which are available for selection by a user of the apparatus using control means **characterised in that** the EPG is generated using a first source in the form embedded code provided in the receiving apparatus and further and/or other applications are generated using a second source in the form of software language provided in the receiving apparatus, the utilisation of the first and/or second source being controlled in response to a user selection using said control means.

2. Broadcast data receiving apparatus according to claim 1 **characterised in that** on activation of the control means for the EPG (2) by the user allowing generation of the EPG and/or changes to the EPG, the receiving apparatus uses the first source of embedded code.

3. Broadcast data receiving apparatus according to claim 1 **characterised in that** on activation of the control means for the selection of applications or functions other than the generation of an EPG (2), the receiving apparatus uses the second source of software language.

4. Broadcast data receiving apparatus according to claim 1 **characterised in that** user selection of an internet web browser application via the control means results in the receiving apparatus generating a display using software language

5. Broadcast data receiving apparatus according to claim 1 **characterised in that** the receiving apparatus switches from using the first source to using the second source and vice versa when the user makes an appropriate selection using the control means.

6. Broadcast data receiving apparatus according to claim 1 **characterised in that** the control means by which the user is able to make a selection resulting in a change of source is a remote control handset.
